# EUROPÄISCHE PATENTSCHRIFT

(11) **EP 3 253 638 B1**
(45) Veröffentlichungstag und Bekanntmachung des Hinweises auf die Patenterteilung: **01.05.2019**
(21) Anmeldenummer: 16714339.5
(22) Anmeldetag: 24.03.2016
(51) Int. Cl.: B61L 1/20, G06F 21/57, H04L 29/06

(54) **VERFAHREN ZUM ÜBERWACHEN EINER NETZWERKKOMPONENTE SOWIE ANORDNUNG MIT EINER NETZWERKKOMPONENTE UND EINER ÜBERWACHUNGS-EINRICHTUNG**
METHOD FOR MONITORING A NETWORK COMPONENT, AND ARRANGEMENT COMPRISING A NETWORK COMPONENT AND A MONITORING DEVICE
PROCÉDÉ SERVANT À SURVEILLER UN COMPOSANT DE RÉSEAU ET ENSEMBLE COMPRENANT UN COMPOSANT DE RÉSEAU ET UN SYSTÈME DE SURVEILLANCE

(30) Priorität: 27.03.2015 DE 102015205607
(43) Veröffentlichungstag der Anmeldung: 13.12.2017
(73) Patentinhaber: Siemens Mobility GmbH, 81739 München (DE)
(72) Erfinder: BRABAND, Jens, 38106 Braunschweig (DE)
(86) Internationale Anmeldenummer: PCT/EP2016/056565
(87) Internationale Veröffentlichungsnummer: WO 2016/156207

(56) Entgegenhaltungen:
- EP-A1- 1 126 655
- EP-A1- 2 442 519
- "EN 50159-1 : 2001 Railway applications. Communication, signalling annd Processing systems. Part 1: Safety-related communication in closed transmission systems", EUROPAEISCHE NORM - EUROPEAN STANDARD - NORME EUROPEENNE, XX, XX, Bd. EN 50159-1, 1. März 2001 (2001-03-01), XP009112743,

## Beschreibung

Eine Überwachung einer Netzwerkkomponente eines Kommunikationsnetzes kann aus unterschiedlichen Gründen erforderlich beziehungsweise zweckmäßig sein. So beschreibt beispielsweise die deutsche Norm DIN EN 50159 Anforderungen an eine sicherheitsrelevante Kommunikation in Übertragungssystemen im Bereich von Bahnanwendungen. Im Rahmen der hierbei vorgegebenen Architektur besteht die Notwendigkeit, dass sicherheitsrelevante Anwendungen und/oder sicherheitsrelevante Übertragungsfunktionen solche selbst nicht in Form einer sicherheitsrelevanten Einrichtung realisierte Funktionen beziehungsweise Komponenten überwachen, auf die sich die jeweilige sicherheitsrelevante Anwendung abstützt.

Aus der Druckschrift EP 2 442 519 A1 ist ein Verfahren zur Authentifizierung einer Netzwerk-Einheit bekannt. Wenn die Netzwerk-Einheit authentifiziert wird, wird ein Integritäts-Überprüfungsergebnis in einer als zuverlässig gekennzeichneten Umgebung der Netzwerk-Einheit aufgenommen. Dieses wird dazu verwendet, eine Authentifizierungs-Anfrage zu initiieren oder um einen Authentifizierungserfolg zu melden.

Aus der Druckschrift EP 1 126 655 A1 ist ein Verfahren zur Authentizitätssicherung von Hard- und Software in einem vernetzten System bekannt. Das vernetzte Systems weist über einen Systembus verbundene Systemkomponenten mit Hardware- und Software-Modulen auf. Die Systemkomponenten weisen jeweils ein Authentifizierungsmerkmal für die Hardware-Module und jeweils ein weiteres Authentifizierungs- bzw. Integritätssicherungsmerkmal für die Software-Module auf. Am Systembus ist ein zentrales Prüfmodul zur Überprüfung der Authentifizierungsmerkmale und/oder der Integritätssicherungsmerkmale angeschaltet.

Der vorliegenden Erfindung liegt die Aufgabe zugrunde, ein besonders leistungsfähiges und zugleich auf vergleichsweise einfache Art und Weise realisierbares Verfahren zum Überwachen einer Netzwerkkomponente anzugeben.

Diese Aufgabe wird erfindungsgemäß gelöst durch ein Verfahren zum Überwachen einer Netzwerkkomponente, bei dem seitens der Netzwerkkomponente unter Verwendung von für einen Zustand der Netzwerkkomponente spezifischen Daten eine das korrekte Funktionieren der Netzwerkkomponente überprüfende Berechnung durchgeführt wird. Seitens der Netzwerkkomponente wird die das Funktionieren der Netzwerkkomponente überprüfende Berechnung in Form einer Verschlüsselung der für den Zustand der Netzwerkkomponente spezifischen Daten durchgeführt. Die verschlüsselten Daten werden von der Netzwerkkomponente als Berechnungsergebnis an die Überwachungs-Einrichtung übermittelt. Von der Überwachungs-Einrichtung werden anhand des übermittelten Berechnungsergebnisses der Zustand der Netzwerkkomponente sowie das korrekte Funktionieren derselben sowie die seitens der Netzwerkkomponente vorgenommene Verschlüsselung überprüft. Von der Überwachungs-Einrichtung wird eine Anfrage-Nachricht mit einem für die jeweilige Anfrage-Nachricht spezifischen Testschlüssel an die Netzwerkkomponente übermittelt. Seitens der Netzwerkkomponente werden die für den Zustand der Netzwerkkomponente spezifischen Daten zwecks Gewährleistung der Aktualität der Berechnung mittels des Testschlüssels verschlüsselt.

Gemäß dem ersten Schritt des erfindungsgemäßen Verfahrens zum Überwachen einer Netzwerkkomponente wird seitens der Netzwerkkomponente unter Verwendung von für einen Zustand der Netzwerkkomponente spezifischen Daten eine das korrekte Funktionieren der Netzwerkkomponente überprüfende Berechnung durchgeführt. Bei der das korrekte Funktionieren der Netzwerkkomponente überprüfenden Berechnung kann es sich dabei grundsätzlich um eine entsprechende Berechnung beliebiger Art handeln. Vorzugsweise ist die Berechnung hierbei derart ausgestaltet, dass zumindest ein Teil der sicherheitsrelevanten Funktionalität der Netzwerkkomponente durch die Berechnung dahingehend überprüft wird, dass eine Fehlfunktion in Bezug auf die betreffende Funktionalität beziehungsweise Funktionalitäten zu einem verfälschten Berechnungsergebnis führen würde.

Im Rahmen des erfindungsgemäßen Verfahrens erfolgt die das korrekte Funktionieren der Netzwerkkomponente überprüfende Berechnung unter Verwendung von für einen Zustand der Netzwerkkomponente spezifischen Daten. Dies bedeutet, dass die Berechnung derart erfolgt, dass Unterschiede bezüglich der für den Zustand der Netzwerkkomponente spezifischen Daten mit an Sicherheit grenzender beziehungsweise zumindest für den jeweiligen Anwendungsfall ausreichender Wahrscheinlichkeit das Berechnungsergebnis beeinflussen.

Gemäß dem zweiten Schritt des erfindungsgemäßen Verfahrens wird das Berechnungsergebnis von der Netzwerkkomponente an eine Überwachungs-Einrichtung übermittelt. Dabei kann die Übermittlung des Berechnungsergebnisses auf beliebige, für sich bekannte Art und Weise erfolgen. Dies schließt insbesondere eine drahtgebundene oder drahtlose, beispielsweise funkbasierte, Übermittlung des Berechnungsergebnisses von der Netzwerkkomponente an die Überwachungs-Einrichtung ein.

Gemäß dem dritten Schritt des erfindungsgemäßen Verfahrens werden sodann von der Überwachungs-Einrichtung anhand des übermittelten Berechnungsergebnisses der Zustand der Netzwerkkomponente sowie das korrekte Funktionieren derselben überprüft. Dies bedeutet, dass der Überwachungs-Einrichtung ein Erwartungswert für das Berechnungsergebnis bekannt ist beziehungsweise die Überwachungs-Einrichtung selbst in der Lage ist, die von der Netzwerkkomponente durchgeführte Berechnung durchzuführen und damit das Berechnungsergebnis zu überprüfen. Hierzu ist es erforderlich, dass der Überwachungs-Einrichtung auch die für den Zustand der Netzwerkkomponente spezifischen Daten, die bei der Berechnung verwendet werden, bekannt sind beziehungsweise der Überwachungs-Einrichtung bekannt ist, welchen Wert die für den Zustand der Netzwerkkomponente spezifischen Daten aufweisen sollten. Anhand des übermittelten Berechnungsergebnisses ist es der Überwachungs-Einrichtung somit möglich, sowohl den Zustand der Netzwerkkomponente als auch das korrekte Funktionieren der Netzwerkkomponente zu überprüfen. So stimmt das von der Netzwerkkomponente ermittelte Berechnungsergebnis ausschließlich dann mit dem von der Überwachungs-Einrichtung berechneten beziehungsweise erwarteten Berechnungsergebnis überein, wenn die Netzwerkkomponente die ihr korrektes Funktionieren überprüfende Berechnung korrekt durchgeführt hat. Hierfür ist es weiterhin erforderlich, dass auch die für den Zustand der Netzwerkkomponente spezifischen Daten dahingehend korrekt sind, dass sie den von der Überwachungs-Einrichtung erwarteten Daten entsprechen.

Im Ergebnis ermöglicht es das erfindungsgemäße Verfahren somit auf vergleichsweise einfache Art und Weise, sowohl den Zustand der überwachten Netzwerkkomponente als auch das korrekte Funktionieren derselben zu überprüfen.

Gemäß einer besonders bevorzugten Ausführungsform ist das erfindungsgemäße Verfahren derart weitergebildet, dass von der Überwachungs-Einrichtung eine Anfrage-Nachricht mit zumindest einem für die jeweilige Anfrage-Nachricht spezifischen Parameter an die Netzwerkkomponente übermittelt wird und seitens der Netzwerkkomponente bei der Durchführung der das Funktionieren der Netzwerkkomponente überprüfenden Berechnung zwecks Gewährleistung der Aktualität der Berechnung der zumindest eine für die jeweilige Anfrage-Nachricht spezifische Parameter verwendet wird. Dies bietet den Vorteil, dass seitens der Überwachungs-Einrichtung sichergestellt wird, dass das von der Netzwerkkomponente übermittelte Berechnungsergebnis tatsächlich aktuell von der Netzwerkkomponente berechnet worden ist. Hierdurch können seitens der Überwachungs-Einrichtung beispielsweise Fehler dahingehend erkannt werden, dass eine Störung oder ein Ausfall von Funktionalität der Netzwerkkomponente vorliegt, diese Störung beziehungsweise dieser Ausfall jedoch dadurch verschleiert wird, dass die Netzwerkkomponente auf ein zu einem früheren Zeitpunkt ermitteltes Berechnungsergebnis zurückgreift und dieses an die Überwachungs-Einrichtung übermittelt. Dadurch, dass von der Überwachungs-Einrichtung eine Anfrage-Nachricht mit zumindest einem für die jeweilige Anfrage-Nachricht spezifischen Parameter an die Netzwerkkomponente übermittelt wird und dieser zumindest eine Parameter seitens der Netzwerkkomponente bei der Durchführung der das Funktionieren der Netzwerkkomponente überprüfenden Berechnung verwendet wird, wird somit die Aktualität der Berechnung des Berechnungsergebnisses gewährleistet. Hierbei wird der zumindest eine für die jeweilige Anfrage-Nachricht spezifische Parameter seitens der Netzwerkkomponente analog zu den für den Zustand der Netzwerkkomponente spezifischen Daten wiederum derart bei der Berechnung verwendet, dass unterschiedliche Parameter mit ausreichend hoher Wahrscheinlichkeit zu unterschiedlichen Berechnungsergebnissen führen.

Das Verfahren ist gemäß der Erfindung ferner derart ausgestaltet, dass seitens der Netzwerkkomponente eine das Funktionieren der Netzwerkkomponente überprüfende Berechnung in Form einer Verschlüsselung der für den Zustand der Netzwerkkomponente spezifischen Daten durchgeführt wird, die verschlüsselten Daten von der Netzwerkkomponente als Berechnungsergebnis an die Überwachungs-Einrichtung übermittelt werden und von der Überwachungs-Einrichtung anhand des übermittelten Berechnungsergebnisses der Zustand der Netzwerkkomponente sowie die seitens der Netzwerkkomponente vorgenommene Verschlüsselung überprüft werden. Insbesondere in Bezug auf solche Netzwerkkomponenten, die in einem Kommunikationsnetz für die Verschlüsselung zuständig sind, besteht die Notwendigkeit, dass seitens sicherheitsrelevanter Anwendungen beziehungsweise Komponenten eine Überwachung der Funktion der Netzwerkkomponente vorgenommen wird. Das erfindungsgemäße Verfahren ermöglicht es in diesem Zusammenhang, sowohl die Berechnung in Form der Verschlüsselung als solche zu überprüfen als auch den Zustand der Netzwerkkomponente anhand der für den Zustand der Netzwerkkomponente spezifischen Daten. Hierdurch können beispielsweise auch solche Fehlerfälle aufgedeckt werden, in denen die Netzwerkkomponente grundsätzlich zwar zum korrekten Verschlüsseln von Nachrichten in der Lage ist, die betreffende Funktionalität jedoch per Konfiguration vollständig oder auch situationsabhängig, etwa in Bezug auf bestimmte Sender und/oder Empfänger, abgeschaltet ist.

Das Verfahren ist gemäß der Erfindung darüber hinaus derart ausgestaltet, dass von der Überwachungs-Einrichtung eine Anfrage-Nachricht mit einem für die jeweilige Anfrage-Nachricht spezifischen Testschlüssel an die Netzwerkkomponente übermittelt wird und seitens der Netzwerkkomponente die für den Zustand der Netzwerkkomponente spezifischen Daten zwecks Gewährleistung der Aktualität der Berechnung mittels des Testschlüssels verschlüsselt werden. Analog zu der zuvor beschriebenen bevorzugten Weiterbildung in Bezug auf das Übermitteln einer Anfrage-Nachricht mit zumindest einem für die jeweilige Anfrage-Nachricht spezifischen Parameter wird es durch das Übermitteln einer Anfrage-Nachricht mit einem für die jeweilige Anfrage-Nachricht spezifischen Testschlüssel von der Überwachungs-Einrichtung an die Netzwerckomponente erfindungsgemäß ermöglicht, sicherzustellen, dass die Berechnung in Form der Verschlüsselung von der Netzwerkkomponente aktuell durchgeführt wird und eine denkbare Übermittlung eines zu einem früheren Zeitpunkt ermittelten Berechnungsergebnisses von der Überwachungs-Einrichtung zuverlässig erkannt wird.

Gemäß einer weiteren besonders bevorzugten Ausführungsform des erfindungsgemäßen Verfahrens werden als für den Zustand der Netzwerkkomponente spezifische Daten Konfigurationsdaten der Netzwerkkomponente verwendet. Dies ist vorteilhaft, da Konfigurationsdaten üblicherweise gut geeignet sind, den Zustand einer Netzwerkkomponente zu spezifizieren. Hierdurch wird es der Überwachungseinrichtung somit ermöglicht, anhand des von der Netzwerkkomponente übermittelten Berechnungsergebnisses mögliche Fehler in den Konfigurationsdaten der Netzwerkkomponente zu erkennen.

Alternativ oder zusätzlich zu der zuvor beschriebenen Ausführungsform kann das erfindungsgemäße Verfahren vorteilhafterweise auch derart ausgeprägt sein, dass als für den Zustand der Netzwerkkomponente spezifische Daten Statusinformationen der Netzwerkkomponente verwendet werden. Dabei kann es sich bei den Statusinformationen der Netzwerkkomponente um Statusinformationen beliebiger Art handeln. Dies schließt einerseits vergleichsweise einfache Statusinformationen der Art "aktiv" oder "inaktiv" ein; andererseits können die Statusinformationen auch deutlich detaillierter und umfangreicher sein. Voraussetzung hierbei ist lediglich, dass die betreffenden Statusinformationen beziehungsweise Erwartungswerte für diese Statusinformationen seitens der Überwachungs-Einrichtung bekannt sind.

Alternativ oder zusätzlich zu den beiden zuvor genannten bevorzugten Weiterbildungen kann das erfindungsgemäße Verfahren vorteilhafterweise auch derart ablaufen, dass als für den Zustand der Netzwerkkomponente spezifische Daten für Software der Netzwerkkomponente spezifische Daten verwendet werden. Bei den für Software der Netzwerkkomponente spezifischen Daten kann es sich hierbei um einen Teil der Software oder auch die vollständige Software der Netzwerkkomponente handeln. Über die entsprechenden Daten kann in für sich bekannter Art und Weise beispielsweise ein Hash-Wert berechnet werden, der die Software beziehungsweise den Softwarestand der Netzwerckomponente eindeutig kennzeichnet. Hierdurch wird es somit seitens der Überwachungs-Einrichtung basierend auf dem übermittelten Berechnungsergebnis ermöglicht, eventuelle Abweichungen der Software der Netzwerkkomponente von der seitens der Überwachungs-Einrichtung vorgesehenen beziehungsweise erwarteten Software zu erkennen.

Vorzugsweise kann das erfindungsgemäße Verfahren auch derart weitergebildet sein, dass die Überwachungs-Einrichtung und die Netzwerkkomponente eine wechselseitige Authentifizierung vornehmen. Dies ist vorteilhaft, da hierdurch gegenüber der jeweiligen anderen Komponente die Identität der Netzwerkkomponente sowie der Überwachungs-Einrichtung gewährleistet wird. Hierdurch werden anderenfalls denkbare Sicherheitsprobleme oder Angriffsmöglichkeiten in Bezug auf die Überwachungs-Einrichtung und/oder die Netzwerkkomponente beziehungsweise die Kommunikation zwischen diesen beiden Komponenten vermieden.

Gemäß einer weiteren besonders bevorzugten Ausführungsform des erfindungsgemäßen Verfahrens wird von der Netzwerkkomponente zusammen mit dem Berechnungsergebnis zumindest ein Parameter der Netzwerkkomponente an die Überwachungs-Einrichtung übermittelt. Bei dem entsprechenden Parameter kann es sich beispielsweise um die Häufigkeit beziehungsweise Frequenz erfolgloser Anmeldeversuche oder nicht authentifizierter Nachrichten handeln. Durch die zusätzliche Übermittlung des zumindest einen Parameters der Netzwerkkomponente an die Überwachungs-Einrichtung besteht seitens derselben vorteilhafterweise die Möglichkeit, neben dem Zustand der Netzwerckomponente sowie dem korrekten Funktionieren derselben auch Informationen zu der Überwachungs-Einrichtung vorab nicht bekannten Parametern zu erhalten und diese im Rahmen der Überwachung der Netzwerkkomponente zu berücksichtigen.

Vorzugsweise kann das erfindungsgemäße Verfahren auch derart ausgestaltet sein, dass der von der Netzwerkkomponente an die Überwachungs-Einrichtung zu übermittelnde zumindest eine Parameter der Netzwerkkomponente von der Überwachungs-Einrichtung mitgeteilt wird. Dies bietet den Vorteil, dass die Überwachungs-Einrichtung selbst gegenüber der Netzwerkkomponente spezifizieren kann, welcher Parameter beziehungsweise welche Parameter von der Netzwerkkomponente zusammen mit dem Berechnungsergebnis an die Überwachungs-Einrichtung übermittelt werden soll beziehungsweise sollen.

Vorzugsweise kann das erfindungsgemäße Verfahren hierbei derart ausgestaltet sein, dass der zumindest eine Parameter eine Angabe zu von der Netzwerkkomponente registrierten Fehlerfällen umfasst. Dies ist vorteilhaft, da die Überwachungs-Einrichtung in die Lage versetzt wird, im Rahmen der Überwachung der Netzwerkkomponente Anzahl, Art und/oder Häufigkeit von der Netzwerkkomponente registrierter Fehlerfälle zu berücksichtigen.

Die vorliegende Erfindung betrifft des Weiteren eine Anordnung mit einer Netzwerkkomponente sowie einer Überwachungs-Einrichtung.

Hinsichtlich der Anordnung liegt der vorliegenden Erfindung die Aufgabe zugrunde, eine Anordnung anzugeben, die ein besonders leistungsfähiges und zugleich auf vergleichsweise einfache Art und Weise realisierbares Verfahren zum Überwachen einer Netzwerkkomponente unterstützt.

Diese Aufgabe wird erfindungsgemäß gelöst durch eine Anordnung mit den Merkmalen des unabhängigen Anspruchs 10.

Die Vorteile der erfindungsgemäßen Anordnung entsprechen im Wesentlichen denjenigen des erfindungsgemäßen Verfahrens, so dass diesbezüglich auf die entsprechenden vorstehenden Erläuterungen verwiesen wird. Gleiches gilt hinsichtlich der bevorzugten Weiterbildungen der erfindungsgemäßen Anordnung in Bezug auf die entsprechenden bevorzugten Weiterbildungen des erfindungsgemäßen Verfahrens, so dass auch diesbezüglich auf die entsprechenden vorherigen Ausführungen verwiesen wird.

Gemäß einer besonders bevorzugten Ausführungsform der erfindungsgemäßen Anordnung sind die Netzwerkkomponente und die Überwachungs-Einrichtung zur Durchführung des Verfahrens nach einem der Ansprüche 1 bis 9 ausgebildet.

Im Folgenden wird die Erfindung anhand von Ausführungsbeispielen näher erläutert. Hierzu zeigt die
- Figur: zur Erläuterung eines Ausführungsbeispiels des erfindungsgemäßen Verfahrens in einer schematischen Skizze ein Ausführungsbeispiel der erfindungsgemäßen Anordnung.

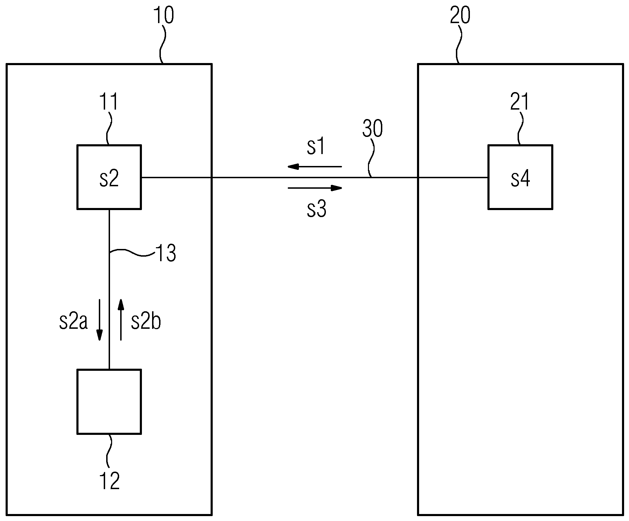

In der Figur ist eine Netzwerkkomponente 10 erkennbar, die eine Steuer-Einrichtung 11, eine Speicher-Einrichtung 12 sowie eine diese verbindende interne Kommunikationsverbindung 13 aufweist. Weiterhin ist eine Überwachungs-Einrichtung 20 dargestellt, die eine Steuer-Einrichtung 21 umfasst. Die Steuer-Einrichtung 21 der Überwachungs-Einrichtung 20 ist über eine Kommunikationsverbindung 30 mit der Steuer-Einrichtung 11 der Netzwerkkomponente 10 verbunden. Bei den entsprechenden Steuer-Einrichtungen 11 und 21 kann es sich hierbei beispielsweise um für sich bekannte Prozessoren beziehungsweise Rechnereinheiten handeln.

Im Rahmen des beschriebenen Ausführungsbeispiels sei angenommen, dass es sich bei der Überwachungs-Einrichtung 20 um eine sicherheitsrelevante Einrichtung handelt, die beispielsweise gemäß den diesbezüglichen Anforderungen der Norm DIN EN 50159 realisiert sein kann. Bezüglich der Netzwerkkomponente 10 sei angenommen, dass diese sicherheitsrelevante kryptografische Technik bereitstellt, d.h. beispielsweise seitens der Überwachungs-Einrichtung 20 bereitgestellte Nachrichten verschlüsselt. Dabei ist die Netzwerkkomponente 10 selbst jedoch nicht als sicherheitsrelevante Einrichtung implementiert beziehungsweise realisiert, so dass eine Fehlfunktion der Netzwerkkomponente 10 grundsätzlich nicht ausgeschlossen werden kann. Aus diesem Grund ist es erforderlich, dass die Funktion der Netzwerkkomponente 10 durch die Überwachungs-Einrichtung 20 überwacht wird.

Es sei darauf hingewiesen, dass die Netzwerkkomponente 10 sowie die Überwachungs-Einrichtung 20 in der Regel sowohl hardwaretechnische als auch softwaretechnische Mittel umfassen werden. In Abhängigkeit von den jeweiligen Umständen besteht hierbei auch die Möglichkeit, dass die Netzwerkkomponente 10 sowie die Überwachungs-Einrichtung 20 ganz oder zumindest teilweise dieselbe Hardware verwenden und somit im Wesentlichen durch entsprechende Softwarekomponenten gekennzeichnet sind. In Bezug auf die aus der DIN EN 50159 bekannte Architektur kann dies beispielsweise derart geschehen, dass die Überwachungs-Einrichtung in Form eines zusätzlichen Moduls oder einer zusätzlichen Softwareschicht zwischen die sicherheitsrelevante Übertragungsfunktion und die sicherheitsrelevante kryptografische Technik oder auch zwischen die sicherheitsrelevante Anwendung und die sicherheitsrelevante Übertragungsfunktion eingezogen wird.

Um nun seitens der Überwachungs-Einrichtung 20 das Funktionieren der Netzwerkkomponente 10 auf besonders zuverlässige und zugleich vergleichsweise einfache Art und Weise überprüfen zu können, kann seitens der Überwachungs-Einrichtung 20 in einem ersten Verfahrensschritt beziehungsweise einer ersten Nachricht s1 eine Anfrage-Nachricht mit zumindest einem für die jeweilige Anfrage-Nachricht spezifischen Parameter an die Netzwerkkomponente 10 übermittelt werden. Dabei entspricht die Anfrage-Nachricht in ihrer Funktion einer Art "Safety Ping", da durch sie eine Überprüfung des korrekten Funktionierens der Netzwerkkomponente 10 angestoßen wird.

Im Rahmen des beschriebenen Ausführungsbeispiels sei angenommen, dass die Anfrage-Nachricht als für die jeweilige Anfrage-Nachricht spezifischen Parameter einen für die jeweilige Anfrage-Nachricht spezifischen Testschlüssel enthält.

Seitens der Netzwerkkomponente 10 wird nun unter Verwendung von für einen Zustand der Netzwerkkomponente 10 spezifischen Daten eine das korrekte Funktionieren der Netzwerkkomponente überprüfende Berechnung durchgeführt. Dies ist in der Figur durch einen der Steuer-Einrichtung 11 zugeordneten Verfahrensschritt s2 sowie die Speicher-Einrichtung einbeziehende Verfahrensschritte s2a und s2b angedeutet. Als für den Zustand der Netzwerkkomponente 10 spezifische Daten können hierbei seitens der Steuer-Einrichtung 11 aus der Speicher-Einrichtung 12 Konfigurationsdaten der Netzwerkkomponente 10, Statusinformationen der Netzwerkkomponente 10 und/oder für Software der Netzwerkkomponente 10 spezifische Daten abgefragt beziehungsweise ausgelesen werden.

Seitens der Netzwerkkomponente 10 beziehungsweise deren Steuer-Einrichtung 11 wird nun eine das Funktionieren der Netzwerkkomponente 10 überprüfende Berechnung in Form einer Verschlüsselung der für den Zustand der Netzwerkkomponente spezifischen Daten durchgeführt. Dabei ist die Berechnung vorzugsweise derart gewählt, dass durch sie eine zumindest weitgehende Überprüfung zumindest der sicherheitsrelevanten Funktion, d.h. eine möglichst weitgehende Funktionsabdeckung, der Netzwerkkomponente 10 ermöglicht wird. Sofern eine vollständige beziehungsweise für den jeweiligen Anwendungsfall ausreichende Funktionsabdeckung mittels einer Berechnung nicht möglich sein sollte, so können hierbei die Ergebnisse verschiedener Berechnungen verknüpft werden.

Sofern mittels der das korrekte Funktionieren der Netzwerckomponente überprüfende Berechnung lediglich eine Teilfunktionalität der Netzwerkkomponente überprüft wird, können innerhalb einer vorgegebenen beziehungsweise vorgebbaren Ausfalloffenbarungszeit in entsprechender Weise weitere Berechnungen durchgeführt werden, um im Ergebnis insgesamt eine möglichst vollständige Abdeckung zumindest der sicherheitsrelevanten Funktionen beziehungsweise Funktionalität der Netzwerkkomponente 10 zu erreichen.

Die verschlüsselten Daten werden von der Netzwerkkomponente 10 in einem Verfahrensschritt s3 als Berechnungsergebnis an die Überwachungs-Einrichtung 20 übermittelt. Diese beziehungsweise deren Steuer-Einrichtung 21 überprüft nun anhand des übermittelten Berechnungsergebnisses den Zustand der Netzwerkkomponente 10 sowie die seitens der Netzwerkkomponente 10 vorgenommene Verschlüsselung. Dies bedeutet, dass der Überwachungs-Einrichtung 20 anhand des empfangenen Berechnungsergebnisses und unter Berücksichtigung von einem Erwartungswert für dieses Berechnungsergebnis, den die Überwachungs-Einrichtung 20 beispielsweise selbst berechnet haben kann, eine weitgehende Überprüfung der Funktionalität der Netzwerkkomponente 10 möglich ist. Dies betrifft sowohl das korrekte Durchführen der Verschlüsselung mittels des Testschlüssels als auch den Wert der für den Zustand der Netzwerkkomponente spezifischen Daten. Die entsprechende Überprüfung ist in der Figur der Steuer-Einrichtung 21 zugeordnet und mit dem Bezugszeichen s4 gekennzeichnet.

Dadurch, dass die Überwachungs-Einrichtung 20 in den Verfahrensschritt s1 eine Anfrage-Nachricht mit dem für die betreffende Anfrage-Nachricht spezifischen Testschlüssel an die Netzwerkkomponente 10 übermittelt hat, ist vorteilhafterweise gewährleistet, dass die Netzwerkkomponente 10 das Berechnungsergebnis tatsächlich aktuell berechnet hat und nicht möglicherweise auf ein früheres Berechnungsergebnis zurückgreift. Zur Erhöhung der Sicherheit führen die Überwachungs-Einrichtung 20 und die Netzwerkkomponente 10 vorzugsweise weiterhin eine wechselseitige Authentifizierung durch, die in der Figur aus Gründen der Übersichtlichkeit nicht dargestellt ist.

Von der Netzwerkkomponente 10 kann im Rahmen des Verfahrensschritts s3 vorteilhafterweise zusammen mit dem Berechnungsergebnis zumindest ein Parameter der Netzwerkkomponente 10 an die Überwachungs-Einrichtung 20 übermittelt werden. Dadurch, dass der betreffende zumindest eine Parameter unmittelbar an die Überwachungs-Einrichtung 20 übermittelt wird, wird es dieser ermöglicht, weitergehende Informationen über die Netzwerkkomponente 10 zu erhalten. Bei dem entsprechenden Parameter kann es sich beispielsweise um eine Angabe zu von der Netzwerkkomponente 10 registrierten Fehlerfällen, etwa in Form der Frequenz erfolgloser Anmeldeversuche oder der Frequenz nicht authentifizierter Nachrichten, handeln. Sofern sich diesbezüglich ein negativer Trend ergibt oder ein Schwellenwert überschritten wird, so kann seitens der Überwachungs-Einrichtung eine angemessene Maßnahme getroffen werden, etwa dahingehend, dass eine Meldung an eine Anwendung abgegeben wird. Vorzugsweise kann der Netzwerkkomponente 10 beispielsweise im Rahmen des Verfahrensschrittes s1 von der Überwachungs-Einrichtung 20 mitgeteilt werden, welcher Parameter beziehungsweise welche Parameter von der Netzwerkkomponente 10 zusammen mit dem Berechnungsergebnis an die Überwachungs-Einrichtung 20 übermittelt werden sollen.

Es sei darauf hingewiesen, dass die Netzwerkkomponente 10 zusätzlich oder alternativ auch eine beliebige andere Funktionalität erbringen könnte. Dies bedeutet, dass es sich bei der Netzwerkkomponente 10 um einen beliebigen Teilnehmer in einem Kommunikationsnetz handeln kann. Auch für einen solchen Teilnehmer ermöglicht es das zuvor beschriebene Verfahren, eine weitgehende Überprüfung der Funktionalität des Teilnehmers beziehungsweise der entsprechenden Netzwerkkomponente 10 vorzunehmen. Hierzu führt die Netzwerkkomponente 10 vorzugsweise eine möglichst komplexe Funktion als Berechnung durch. Diese kann beispielsweise darin bestehen, dass eine Hash-Funktion berechnet wird, deren Startwert von einem aktuell gebildeten Code über die Software und die für den Zustand der Netzwerckomponente 10 spezifischen Daten abhängt.

Das zuvor anhand von Ausführungsbeispielen beschriebene Verfahren sowie die zugehörige Anordnung ermöglichen vorteilhafterweise eine zuverlässige Überwachung der Netzwerkkomponente 10 durch die Überwachungs-Einrichtung 20. Dies ist insbesondere in solchen Fällen relevant, in denen die Netzwerckomponente 10 eine sicherheitsrelevante Funktion erbringt ohne jedoch selbst als entsprechende sicherheitsrelevante Einrichtung beispielsweise gemäß der Norm DIN EN 50159 realisiert zu sein. Durch eine entsprechende, vorzugsweise zyklisch ablaufende Überwachung mittels der Überwachungs-Einrichtung 20 wird es somit vorteilhafterweise ermöglicht, auch solche Netzwerkkomponenten 10 für sicherheitsrelevante Anwendungen, beispielsweise im Bahnbereich, zu nutzen.

## Patentansprüche

1. Verfahren zum Überwachen einer Netzwerkkomponente (10),
- bei dem seitens der Netzwerkkomponente (10) unter Verwendung von für einen Zustand der Netzwerkkomponente (10) spezifischen Daten eine das korrekte Funktionieren der Netzwerkkomponente (10) überprüfende Berechnung durchgeführt wird (s2),
- bei dem seitens der Netzwerkkomponente (10) die das Funktionieren der Netzwerkkomponente (10) überprüfende Berechnung in Form einer Verschlüsselung der für den Zustand der Netzwerkkomponente (10) spezifischen Daten durchgeführt wird,
- bei dem die verschlüsselten Daten von der Netzwerkkomponente (10) als Berechnungsergebnis an die Überwachungs-Einrichtung (20) übermittelt werden (s3),
- bei dem von der Überwachungs-Einrichtung (20) anhand des übermittelten Berechnungsergebnisses der Zustand der Netzwerkkomponente (10) sowie das korrekte Funktionieren derselben sowie die seitens der Netzwerkkomponente (10) vorgenommene Verschlüsselung überprüft werden,
- bei dem von der Überwachungs-Einrichtung (20) eine Anfrage-Nachricht mit einem für die jeweilige Anfrage-Nachricht spezifischen Testschlüssel an die Netzwerkkomponente (10) übermittelt wird, und
- bei dem seitens der Netzwerkkomponente (10) die für den Zustand der Netzwerkkomponente (10) spezifischen Daten zwecks Gewährleistung der Aktualität der Berechnung mittels des Testschlüssels verschlüsselt werden.

2. Verfahren nach Anspruch 1,
- bei dem von der Überwachungs-Einrichtung (20) eine Anfrage-Nachricht mit zumindest einem für die jeweilige Anfrage-Nachricht spezifischen Parameter an die Netzwerkkomponente (10) übermittelt wird (s1), und
- bei dem seitens der Netzwerkkomponente (10) bei der Durchführung der das Funktionieren der Netzwerkkomponente (10) überprüfenden Berechnung zwecks Gewährleistung der Aktualität der Berechnung der zumindest eine für die jeweilige Anfrage-Nachricht spezifische Parameter verwendet wird.

3. Verfahren nach einem der vorangehenden Ansprüche,
bei dem als für den Zustand der Netzwerkkomponente (10) spezifische Daten Konfigurationsdaten der Netzwerkkomponente (10) verwendet werden.

4. Verfahren nach einem der vorangehenden Ansprüche,
bei dem als für den Zustand der Netzwerkkomponente (10) spezifische Daten Statusinformationen der Netzwerkkomponente (10) verwendet werden.

5. Verfahren nach einem der vorangehenden Ansprüche,
bei dem als für den Zustand der Netzwerkkomponente (10) spezifische Daten für Software der Netzwerkkomponente (10) spezifische Daten verwendet werden.

6. Verfahren nach einem der vorangehenden Ansprüche,
bei dem die Überwachungs-Einrichtung (20) und die Netzwerckomponente (10) eine wechselseitige Authentifizierung vornehmen.

7. Verfahren nach einem der vorangehenden Ansprüche,
bei dem von der Netzwerkkomponente (10) zusammen mit dem Berechnungsergebnis zumindest ein Parameter der Netzwerkkomponente (10) an die Überwachungs-Einrichtung (20) übermittelt wird.

8. Verfahren Anspruch 7,
bei dem der von der Netzwerkkomponente (10) an die Überwachungs-Einrichtung (20) zu übermittelnde zumindest eine Parameter der Netzwerkkomponente (10) von der Überwachungs-Einrichtung (20) mitgeteilt wird.

9. Verfahren nach Anspruch 7 oder 8,
bei dem der zumindest eine Parameter eine Angabe zu von der Netzwerkkomponente (10) registrierten Fehlerfällen umfasst.

10. Anordnung mit einer Netzwerkkomponente (10) und mit einer Überwachungs-Einrichtung (20),
- wobei die Netzwerkkomponente (10) ausgebildet ist
- zum Durchführen einer das korrekte Funktionieren der Netzwerkkomponente (10) überprüfenden Berechnung in Form einer Verschlüsselung von für den Zustand der Netzwerkkomponente (10) spezifischen Daten sowie
- zum Übermitteln der verschlüsselten Daten als Berechnungsergebnis an die Überwachungs-Einrichtung (20), und
- wobei die Überwachungs-Einrichtung (20) ausgebildet ist
- zum Überprüfen des Zustands der Netzwerkkomponente (10) sowie der seitens der Netzwerkkomponente (10) vorgenommenen Verschlüsselung sowie des korrekten Funktionierens derselben anhand des übermittelten Berechnungsergebnisses,
- wobei die Überwachungs-Einrichtung (20) ausgebildet ist, dass von der Überwachungs-Einrichtung (20) eine Anfrage-Nachricht mit einem für die jeweilige Anfrage-Nachricht spezifischen Testschlüssel an die Netzwerkkomponente (10) übermittelt wird,
- wobei die Netzwerkkomponente (10) ausgebildet ist, dass seitens der Netzwerkkomponente (10) die für den Zustand der Netzwerkkomponente (10) spezifischen Daten zwecks Gewährleistung der Aktualität der Berechnung mittels des Testschlüssels verschlüsselt werden.

11. Anordnung nach Anspruch 10,
bei dem die Netzwerkkomponente (10) und die Überwachungs-Einrichtung (20) zur Durchführung des Verfahrens nach einem der Ansprüche 1 bis 9 ausgebildet sind.

## Claims

1. Method for monitoring a network component (10),
- in which the network component (10) carries out (s2) a calculation which checks the correct functionality of the network component (10) using data which is specific to a state of the network component (10),
- in which the network component (10) carries out the calculation which checks the functionality of the network component (10) in the form of encrypting the data specific to the state of the network component (10),
- in which the encrypted data is transmitted (s3) from the network component (10) as a calculation result to the monitoring device (20),
- in which the state of the network component (10) and the correct functionality of the same and the encryption performed by the network component (10) are checked by the monitoring device (20) on the basis of the transmitted calculation result,
- in which a request message with a test key which is specific to the respective request message is transmitted from the monitoring device (20) to the network component (10), and
- in which the network component (10) encrypts the data which is specific to the state of the network component (10) for the purpose of ensuring that the calculation status is up to date by means of the test key.

2. Method according to claim 1,
- in which the monitoring device (20) transmits (s1) a request message with at least one parameter which is specific to the respective request message to the network component (10) and
- in which the network component (10) is used to carry out the calculation which checks the functionality of the network component (10) for the purpose of ensuring that the calculation of the at least one parameter which is specific to the respective request message is up to date.

3. Method according to one of the preceding claims,
in which configuration data of the network component (10) is used as data which is specific to the state of the network component (10).

4. Method according to one of the preceding claims,
in which status information of the network component (10) is used as data which is specific to the state of the network component (10).

5. Method according to one of the preceding claims,
in which data which is specific to software of the network component (10) is used as data which is specific to the state of the network component (10).

6. Method according to one of the preceding claims,
in which the monitoring device (20) and the network component (10) perform an alternating authentication.

7. Method according to one of the preceding claims,
in which at least one parameter of the network component (10) is transmitted from the network component (10) together with the calculation result to the monitoring device (20).

8. Method according to claim 7,
in which the at least one parameter of the network component (10) to be transmitted from the network component (10) to the monitoring device (20) is communicated by the monitoring device (20).

9. Method according to claim 7 or 8,
in which the at least one parameter comprises a specification relating to error cases registered by the network component (10) .

10. Arrangement having a network component (10) and a monitoring device (20),
- wherein the network component (10) is embodied
- for carrying out a calculation which checks the correct functionality of the network component (10) in the form of encrypting data which is specific to the state of the network component (10) and
- for transmitting the encrypted data as a calculation result to the monitoring device (20), and
- wherein the monitoring device (20) is embodied
- for checking the state of the network component (10) and the encryption performed by the network component (10) and the correct functionality of the same on the basis of the transmitted calculation result,
- wherein the monitoring device (20) is embodied to transmit a request message with a test key which is specific to the respective request message to the network component (10),
- wherein the network component (10) is embodied to encrypt the data specific to the state of the network component (10) for the purpose of ensuring that the calculation is up to date by means of the test key.

11. Arrangement according to claim 10,
in which the network component (10) and the monitoring device (20) are embodied to carry out the method according to one of claims 1 to 9.

## Revendications

1. Procédé servant à surveiller un composant de réseau (10),
- dans lequel, côté composant de réseau (10), en utilisant des données spécifiques à un état du composant de réseau (10), un calcul vérifiant le fonctionnement correct du composant de réseau (10) est effectué (s2),
- dans lequel, côté composant de réseau (10), le calcul vérifiant le fonctionnement du composant de réseau (10) est effectué sous forme d'un encryptage des données spécifiques à l'état du composant de réseau (10),
- dans lequel les données encryptées sont transmises (s3) en tant que résultat de calcul au dispositif de surveillance (20) par le composant de réseau (10),
- dans lequel l'état du composant de réseau (10) ainsi que le fonctionnement correct de celui-ci ainsi que l'encryptage entrepris côté composant de réseau (10) sont vérifiés par le dispositif de surveillance (20) à l'aide du résultat de calcul transmis,
- dans lequel un message de requête avec un code test spécifique au message de requête respectif est transmis au composant de réseau (10) par le dispositif de surveillance (20), et
- dans lequel, côté composant de réseau (10), les données spécifiques à l'état du composant de réseau (10) sont encryptées au moyen du code clé dans le but de garantir l'actualité du calcul.

2. Procédé selon la revendication 1,
- dans lequel un message de requête avec au moins un paramètre spécifique au message de requête respectif est envoyé (s1) au composant de réseau (10) par le dispositif de surveillance (20), et
- dans lequel, côté composant de réseau (10), lors de l'exécution du calcul vérifiant le fonctionnement du composant de réseau (10), l'au moins un paramètre spécifique au message de requête respectif est employé dans le but de garantir l'actualité du calcul.

3. Procédé selon l'une des revendications précédentes, dans lequel des données de configuration du composant de réseau (10) sont employées en tant que données spécifiques à l'état du composant de réseau (10).

4. Procédé selon l'une des revendications précédentes, dans lequel des données de statut du composant de réseau (10) sont employées en tant que données spécifiques à l'état du composant de réseau (10).

5. Procédé selon l'une des revendications précédentes, dans lequel des données spécifiques au logiciel du composant de réseau (10) sont employées en tant que données spécifiques à l'état du composant de réseau (10).

6. Procédé selon l'une des revendications précédentes, dans lequel le dispositif de surveillance (20) et le composant de réseau (10) entreprennent une authentification réciproque.

7. Procédé selon l'une des revendications précédentes, dans lequel au moins un paramètre du composant de réseau (10) est transmis au dispositif de surveillance (20) par le composant de réseau (10), conjointement avec le résultat de calcul.

8. Procédé selon la revendication 7,
dans lequel l'au moins un paramètre du composant de réseau (10) à transmettre par le composant de réseau (10) au dispositif de surveillance (20) est communiqué par le dispositif de surveillance (20).

9. Procédé selon la revendication 7 ou 8,
dans lequel l'au moins un paramètre comprend une indication de cas d'erreur enregistrés par le composant de réseau (10).

10. Ensemble comprenant un composant de réseau (10) et un dispositif de surveillance (20),
- dans lequel le composant de réseau (10) est conçu
- pour exécuter un calcul vérifiant le fonctionnement correct du composant de réseau (10) sous forme d'un encryptage de données spécifiques à l'état du composant de réseau (10) ainsi que
- pour transmettre les données encryptées en tant que résultat de calcul au dispositif de surveillance (20), et
- dans lequel le dispositif de surveillance (20) est conçu pour
- vérifier l'état du composant de réseau (10) ainsi que l'encryptage entrepris côté composant de réseau (10) ainsi que le fonctionnement correct de celui-ci à l'aide du résultat de calcul transmis,
- dans lequel le dispositif de surveillance (20) est conçu pour qu'un message de requête avec un code test spécifique au message de requête respectif soit transmis au composant de réseau (10) par le dispositif de surveillance (20),
- dans lequel le composant de réseau (10) est conçu pour que, côté composant de réseau (10), les données spécifiques à l'état du composant de réseau (10) soient encryptées au moyen du code clé dans le but de garantir l'actualité du calcul.

11. Ensemble selon la revendication 10, dans lequel le composant de réseau (10) et le dispositif de surveillance (20) sont conçus pour exécuter le procédé selon l'une des revendications 1 à 9.
